# EUROPEAN PATENT APPLICATION

(11) **EP 2 772 837 A1**
(43) Date of publication of application: **03.09.2014**
(21) Application number: 13157301.6
(22) Date of filing: 28.02.2013
(51) Int. Cl.: G06F 3/044, G06K 19/07

(54) **Touch sensor for smartcard**

(71) Applicant: NXP B.V., 5656 AG Eindhoven (NL)
(72) Inventor: Burghardt, Arne, 5656 AG Eindhoven (NL); Suwald, Thomas, 5656 AG Eindhoven (NL); Mackenthun, Fabian, 5656 AG Eindhoven (NL); Sedzin, Aliaksei, 5656 AG Eindhoven (NL)
(74) Representative: Krott, Michel

(57) **Abstract**

A touch sensor (150) for providing touch position data in response to a user operation, the touch position data being indicative of a position of the touch sensor (150) touched by the user, the touch sensor (150) comprising a plurality of diamond-shaped touch sensitive elements (152) arranged in rows (154) and columns (156) and each being configured for changing an electric property in the presence of a user controlled actuator, a plurality of row readout interfaces (158) at each of which an electric row readout signal is to be applied, wherein, for each row (154), all touch sensitive elements (152) of the respective row (154) are electrically connected to one another and are electrically coupled with an assigned one of the row readout interfaces (158), a plurality of column readout interfaces (160) at each of which an electric column readout signal is to be applied, wherein, for each column (156), all touch sensitive elements (152) of the respective column (156) are electrically connected to one another and are electrically coupled with an assigned one of the column readout interfaces (160), a readout detection interface (162) electrically coupled to each of the touch sensitive elements (152) for detecting an electric readout detection signal from the touch sensitive elements (152) of each row (154) and each column (156); a touch position data generator (140) configured for generating the touch position data including an indication of a touch row (154) at which the user has touched a touch sensitive element (152) and including an indication of a touch column (156) at which the user has touched the touch sensitive element (152), wherein the touch position data generator (140) is configured for determining the touch row (154) based on the electric readout detection signal detected upon applying row readout signals subsequently to the individual row readout interfaces (158) and for determining the touch column (156) based on the electric readout detection signal detected upon applying column readout signals subsequently to the individual column readout interfaces (160).

## Description

### FIELD OF THE INVENTION

The invention relates to a smartcard.

The invention further relates to a touch sensor.

The invention furthermore relates to a method of determining a user input.

### BACKGROUND OF THE INVENTION

Touch sensors are used in various technical fields for enabling a user to make a selection on a touch area of an electronic device. Conventional touch sensors are disclosed in US 5,543,591, US 7,129,935, US 5,841,078, and US 5,914,465.

A smartcard, chip card, or integrated circuit card is any pocket-sized card with integrated circuits embedded in a plastic substrate. Smartcards can provide identification, authentication, data storage and application processing.

Contactless smartcards do not require physical contact between smartcard and read and/or write device and are becoming increasingly popular for payment and ticketing applications such as mass transit and motorway tolls. Smartcards are also being introduced in personal identification and entitlement schemes at regional, national, and international levels. Citizen cards, driver licenses, and patient card schemes are appearing.

However, in view of their small size and limited capabilities of its processor, smartcards have limited applications, since it is difficult to integrate functional and structural components into the small size of a smartcard.

### OBJECT AND SUMMARY OF THE INVENTION

It is an object of the invention to enable extended performance of man-machine interfaces, particularly of a smartcard.

In order to achieve the object defined above, a smartcard, a touch sensor, and a method of determining a user input according to the independent claims are provided.

According to an exemplary embodiment of the invention, a touch sensor for providing touch position data in response to a user operation is provided, the touch position data being indicative of a position of the touch sensor touched by the user, the touch sensor comprising a plurality of diamond-shaped touch sensitive elements arranged (for instance in a matrix-like arrangement) in rows and columns and each being configured for changing an electric property (which may be detectable) in the presence of a user controlled actuator (particularly a body part of the user such as a finger or a probe such as a selection stylus which user controlled actuator may influence or modify a stray field or fringe field of a fringe capacitor or may exert pressure to thereby change a capacitance value of a capacitive touch sensitive element or to thereby change an ohmic resistance value of an ohmic touch sensitive element), a plurality of row readout interfaces at each of which an electric row readout signal (which may also be denoted as drive signal or row drive signal) is to be applied, wherein, for each row, all touch sensitive elements of the respective row are electrically connected to one another and are electrically coupled with an assigned one of the row readout interfaces, a plurality of column readout interfaces at each of which an electric column readout signal (which may also be denoted as drive signal or column drive signal) is to be applied, wherein, for each column, all touch sensitive elements of the respective column are electrically connected to one another and are electrically coupled with an assigned one of the column readout interfaces (particularly a specific row or column readout signal is applied at a time only to one of the rows or only to one of the columns of touch sensitive elements, wherein all remaining rows and columns are free of such a readout signal at this time and may remain at a neutral or constant electric level, wherein the respectively active row or column may be sequentially changed to thereby sample the rows and columns sequentially to detect a touch event), a readout detection interface electrically coupled to each of the touch sensitive elements for detecting an electric readout detection signal from the touch sensitive elements of each row and each column (particularly simultaneously, so that the readout detection interface may be denoted as an integrator node at which an integral signal from all rows and columns is detected; wherein a characteristic change of the readout detection signal occurs only when a user touches a touch sensitive element to which presently the readout signal is applied), and a touch position data generator configured for generating the touch position data including an indication of a touch row at which the user has touched a touch sensitive element and including an indication of a touch column at which the user has touched the touch sensitive element, wherein the touch position data generator is configured for determining the touch row based on the electric readout detection signal detected upon applying row readout signals subsequently to the individual row readout interfaces and for determining the touch column based on the electric readout detection signal detected upon applying column readout signals subsequently to the individual column readout interfaces.

According to yet another exemplary embodiment of the invention, a method of determining a user input by a touch sensor for providing touch position data in response to a user operation is provided, the touch position data being indicative of a position of the touch sensor touched by the user, wherein the touch sensor comprises a plurality of diamond-shaped touch sensitive elements arranged in rows and columns and each being configured for changing an electric property in the presence of a user controlled actuator, wherein the method comprises subsequently applying an electric row readout signal to each of a plurality of row readout interfaces, wherein, for each row, all touch sensitive elements of the respective row are electrically connected to one another and are electrically coupled with an assigned one of the row readout interfaces, subsequently applying an electric column readout signal to each of a plurality of column readout interfaces, wherein, for each column, all touch sensitive elements of the respective column are electrically connected to one another and are electrically coupled with an assigned one of the column readout interfaces (particularly, the readout signal is applied only to one row or column at a time, so that at each time, all but one rows and columns are inactive and only one of the rows or columns is active in terms of application of the readout signal), detecting, for each individual application of the electric row readout signal and for each individual application of the electric column readout signal, an electric readout detection signal at a (particularly single) readout detection interface electrically coupled to each of the touch sensitive elements of each row and each column, and generating the touch position data including an indication of a touch row at which the user has touched a touch sensitive element and including an indication of a touch column at which the user has touched the touch sensitive element by determining the touch row based on the electric readout detection signal detected upon applying row readout signals subsequently to the individual row readout interfaces, and determining the touch column based on the electric readout detection signal detected upon applying column readout signals subsequently to the individual column readout interfaces.

According to an exemplary embodiment of the invention, a smartcard for cooperation (particularly for communication) with a read and/or write device is provided, wherein the smartcard comprises a carrier substrate (which may be of pocket size, for instance may be a flat plate with a length between 3 cm and 10 cm, with a width between 3 cm and 10 cm, and with a thickness between 0.5 mm and 2 cm), a (wired or wireless) communication unit integrated in and/or on the carrier substrate and configured for communicating with the read and/or write device, a touch sensor having the above mentioned features, being integrated in and/or on the carrier substrate and configured for providing touch position data to a processor in response to a user operation, the touch position data being indicative of a position of the touch sensor touched by the user, and the processor integrated in and/or on the carrier substrate and configured for processing the touch position data and for data communication with the read and/or write device via the communication unit.

According to an exemplary embodiment of the invention, a for instance capacitive touch sensor may be embedded on a smartcard or on another electronic device. The sensor can be used for instance to unlock the smartcard or to enter a pin. A plurality of for example capacitive touch sensitive elements (for instance a number of capacitors between 4 and 100) may be connected to a very small number of connections. Such a smartcard may decode the capacitance changes into vertical and horizontal coordinates of the touched point. In order to reduce the number of connections to the touch sensor controller integrated circuit, a design of the capacitor's geometry is possible which is based on the provision of a mesh of capacitors or other touch sensitive elements some of which are connected electrically in parallel (and structurally in series). Exemplary embodiments may hence reduce the number of connections for capacitive touch fringe capacitors or other touch sensitive elements by using such a geometry. The touch sensitive elements are not necessarily capacitive elements, the may be other electric members such as ohmic resistances changing the value of the ohmic resistance when being touched or piezoelectric elements changing their electric properties upon applying pressure thereon. Diamond-shaped touch sensitive elements allow for a compact construction of the device.

With the described architecture, it is possible to manufacture the touch sensor with reasonable effort and to determine touch information quickly and with low computational burden. Thus, it is particularly advantageous to embed such a touch sensor in a smartcard with its limited processing resources.

Next, further exemplary embodiments of the smartcard, the touch sensor, and the method of determining a user input will be explained.

In embodiments of the invention, the detection of a touch position (or a plurality of subsequent touch positions) may allow to determine a user selection among different options on a selection area or may also allow to detect a more complex sequence of touch events such as a gesture made by a user.

In an embodiment, the touch sensitive elements of all columns (or rows) and electrically conductive connection lines connecting touch sensitive elements of a respective column (or row) to one another may all be formed by correspondingly patterning a planar layer of electrically conductive material (such as a copper layer) on a non-conductive substrate. In an embodiment, the touch sensitive elements of all rows (or columns) and electrically conductive connection lines connecting touch sensitive elements of a respective row (or column) to one another may all be formed by correspondingly patterning another planar layer of electrically conductive material (such as a further copper layer) spaced with regard to the first patterned planar layer by a non-conductive spacer (such as an electrically isolating layer). The two spaced electrically conductive layers are appropriate for electrically decoupling crossings of row connection lines and column connection lines. Thus, with a standard lithography and etching technique, in combination with a standard layer deposition technique, it is possible to manufacture the touch sensor at very low cost and in a simple and error-robust way.

Particularly, there may be exactly one electric detection interface at which a common electric readout detection signal is detected in common for all touch sensitive elements of all rows and all columns. Hence, in this embodiment, a single readout detection interface for measuring for instance a detection voltage or a detection current from the touch sensitive elements of all rows and columns may be sufficient. Therefore, the number of electric connections and therefore the dimension of the touch sensor may be kept very small. From the detected electric readout detection signal from all touch sensitive elements measured in response to the application of the row/column readout signals subsequently to each row and column, the touch position information can be derived by evaluating a single detection signal. When a user's body part (such as a finger) is present at one or more of the touch sensitive elements or pressure is applied by the user to one or more of the touch sensitive elements, the electric property of these touch sensitive elements may be locally modified so that the readout detection or response signal will be influenced as well if the stimulus signal for the detection is presently applied to a row or column to which the touched touch sensitive element or pixel relates.

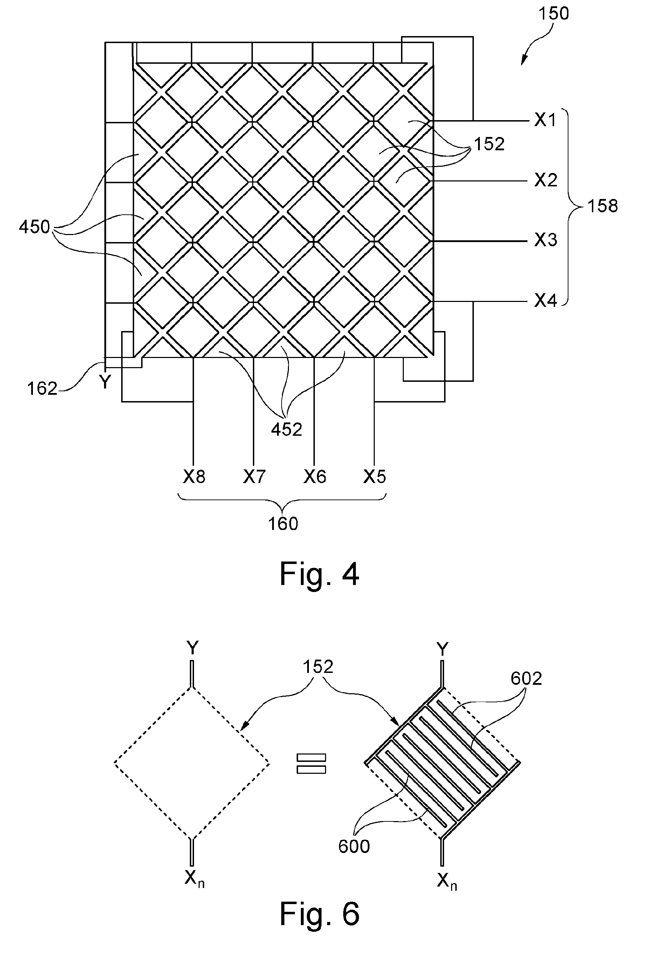

In an embodiment, the touch sensitive elements are capacitive touch sensitive elements comprising two separated electrically conductive structures, particularly being interdigitating conductive structures, more particularly being interdigitating finger electrodes, arranged for changing its capacitance value in the presence of a user controlled actuator. Particularly, one of the two separated electrically conductive structures of each of the touch sensitive elements may be coupled to one another and to the readout detection interface. The other one of the two separated electrically conductive structures of each of the touch sensitive elements may be coupled to the respectively assigned column readout interface (and to all other ones of the two separated electrically conductive structures of each touch sensitive element of the same column) or row readout interface (and to all other ones of the two separated electrically conductive structures of each touch sensitive element of the same row). Fig. 6 shows an embodiment of such a touch sensitive element.

In an embodiment, the touch sensitive elements are capacitive touch sensitive elements, particularly fringe capacitors. They may each comprise two spatially separated electrically conductive structures arranged for changing its capacitance in the presence of a user controlled actuator. Capacitive touch sensitive elements may be based on the effect that two electrically conductive structures are separated so as to form a capacitor. When a user touches such a capacitive touch sensitive element, the electric field (particularly the stray field) between the two separated electrically conductive structures is changed in view of the dielectric constant of tissue which differs from the dielectric constant of air which results in a distortion of the electric field or a change of the capacitance value and hence of the electric properties of this capacitance touch sensitive element. The presence of a touch event at a certain position of the touch sensor may then be detected by localizing those one or more capacitive touch sensitive elements whose electric properties have changed as a result of the presence of a user controlled actuator at a certain position of the touch sensor.

In an embodiment, the processor assigns a selectable function to at least a part of the touch positions of the touch sensor. Hence, if a user has touched a certain position of the touch sensor, this position is detected and the touching of this position of the touch sensor is interpreted as a selection of the corresponding function assigned to this position. To intuitively indicate the selectable function assigned to a certain position to the user, a corresponding indicia may be provided at this position of the touch sensor, such as a printed (or displayed, for instance by an LCD display) information.

In an embodiment, touch sensitive elements of adjacent rows are arranged to partially overlap with interposed touch sensitive elements of the columns and/or touch sensitive elements of adjacent columns are arranged to partially overlap with interposed touch sensitive elements of the rows, thereby forming a mesh structure. By such an interleaved arrangement of the touch sensitive elements relating to rows and columns which overlap horizontally and/or vertically, a highly compact arrangement of capacitive touch sensitive elements is obtained which allows for a high spatial resolution of the touch position detection with a small area consumption. Also, by such a configuration, a user may activate more than one touch sensitive element at a time when touching a certain position of the touch sensor, thereby allowing to detect redundant information regarding a touch position which further increases the accuracy of the detection and reduces the probability of failure.

In an embodiment, the touch sensitive elements are diamond-shaped with a first diagonal extending along the or parallel to the rows and with a perpendicular second diagonal extending along the or parallel to the columns. The term "diamond shape" may particularly denote a square-like shape, wherein the edges or sides of the diamond have a 45° angle with the directions of the rows and the columns. With such a diamond-shaped configuration, the interleaving between touch sensitive elements of rows and columns may be further promoted. Each pair of adjacent diamonds (of electrically conductive material) may constitute a fringe capacitor. A fringe capacitor formed by two interdigitating electrically conductive structures (such as the finger electrodes of Fig. 6) at the same height level detects a touch event based on a change of the stray field between them which results from the presence of the finger disturbing the stray field. Generally, the term "shape" of the touch sensitive element particularly when being configured as interdigitating, but spatially separated conductive structures such as interdigitating finger electrodes may refer to the envelope or external contour of this structure (see Fig. 6).

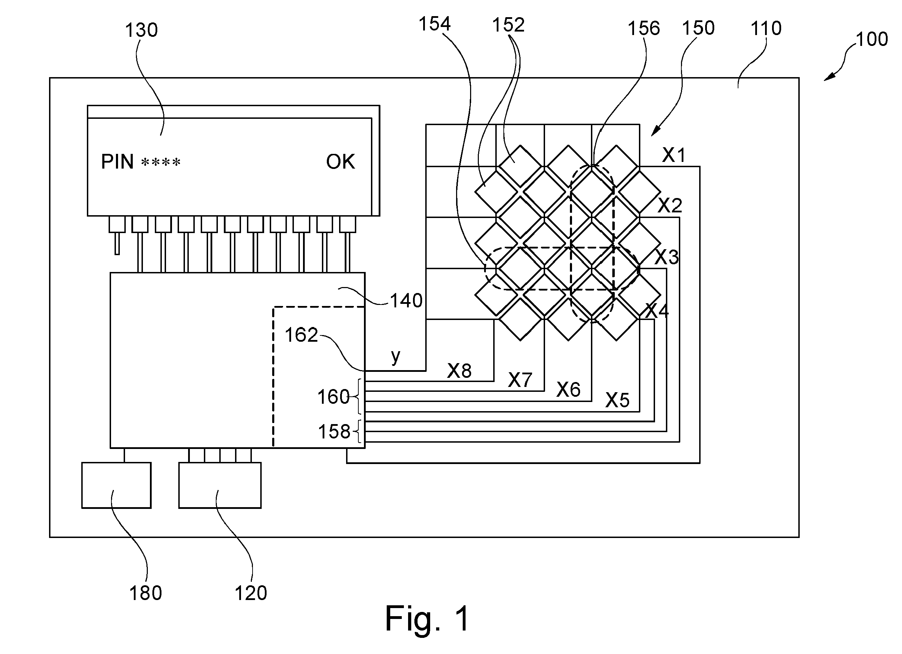

In an embodiment (see for instance Fig. 1 to Fig. 4), the touch position data generator is configured for correlating a change of the detected electric readout detection signal in response to the presence of a user controlled actuator at a row assigned to a row readout interface to which the row readout signal is presently applied when the change occurs. In other words, if a row readout signal is presently applied to a certain row and the readout detection signal consequently changes extraordinarily, it can be concluded that the touch position belongs to the corresponding row. The touch position data generator may be further configured for determining the touch column by correlating a change of the detected electric readout detection signal in response to the presence of a user controlled actuator at a column assigned to a column readout interface to which the column readout signal is presently applied when the change occurs. Hence, if a column readout signal is presently applied to a certain column which causes the readout detection signal to change extraordinarily, it can be concluded that the touch position relates to the corresponding column. The point of intersection of the touched row and the touched column equals to the touched position. It may even happen that a user presses onto two (or more) adjacent rows and/or columns of touch sensitive elements which results in a change of the detection signal related to more than one adjacent rows or columns at a time. The combination of the information regarding the row(s) and column(s) for which changes in the detection signals have occurred allows an unambiguous decision regarding the touch position. Depending on the detected touch position, the processor may then initiate a certain event, for instance may execute an assigned algorithm or may provide a certain function.

In an embodiment, all touch sensitive elements are configured to have the same electric property (for instance the same value of capacitance or the same ohmic resistance) in the absence of a user controlled actuator. The electrical property may be the capacitance value, alternatively a value of the ohmic resistance or the like. If all touch sensitive elements are configured to have the same default value of this electric property, for instance the same capacitance, the manufacture of the touch sensitive elements may be performed with low effort, since no differences in the individual manufacturing processes need to be made. Also the expected change of the detection signal upon touching a touch sensitive element does not differ for the different touch sensitive elements which simplifies the evaluation of the detection signal and renders the detection failure robust.

In another embodiment, all touch sensitive elements located along a circumferential edge of a rectangular, particularly a quadratic or square, array of touch sensitive elements are configured to have a first electric property, particularly a first capacitance value, in the absence of a body part of a user. All touch sensitive elements located within the circumferential edge may be configured to have a second electric property, particularly a second capacitance value, which differs from the first electric property. In such an embodiment, an example of which being shown in Fig. 4, an array of mutually overlapping diamond-shaped touch sensitive elements may constitute the central touch sensitive elements. In order to avoid a non-rectangular geometry of a touch area resulting from these central diamonds, a rectangular shape of the array may be completed by for instance triangular circumferentially arranged touch sensitive elements which form edges of a rectangular touch sensitive area. Thus, a full rectangular two-dimensional area can be rendered active for a touch operation. The signal application and evaluation logic may be the same for the circumferential touch sensitive elements as for the central touch sensitive elements. In view of their different area and shape, the influence of the circumferential touch sensitive elements on the detection signal may be different (usually smaller) which can be beneficially used for the evaluation of the detection signal. In order to keep the number of connection lines small, circumferential touch sensitive elements of a row may be connected to the row readout interface of the directly adjacent row of central touch sensitive elements. Correspondingly, circumferential touch sensitive elements of a column may be connected to the column readout interface of the directly adjacent column of central touch sensitive elements. Detection signals from the circumferential row touch sensitive elements on the one hand and from the electrically connected central row touch sensitive elements on the other hand may be distinguished by the different values of the detection signal resulting from the different values of their electric properties. Detection signals from the circumferential column touch sensitive elements on the one hand and from the electrically connected central column touch sensitive elements on the other hand may be distinguished by the different values of the detection signal resulting from the different values of their electric properties.

In an embodiment, the touch sensor has a total number of touch sensitive element signal interfaces (i.e. interfaces for applying and detecting signals for determining a touch position) which equals to a number of the rows plus a number of the columns plus one. By the connection of all touch sensitive elements of a row/column, a number of connections may be significantly reduced. Since only a row and a column need to be identified at which a change of the electric signal occurs in view of the presence of a user controlled actuator, a very simple circuitry is sufficient for operating the touch sensor. For example, one - i.e. the same - input or stimulus signal is applied subsequently to all touch sensitive elements of a row or of a column. One single signal is detected for all touch sensitive elements of all rows and all columns.

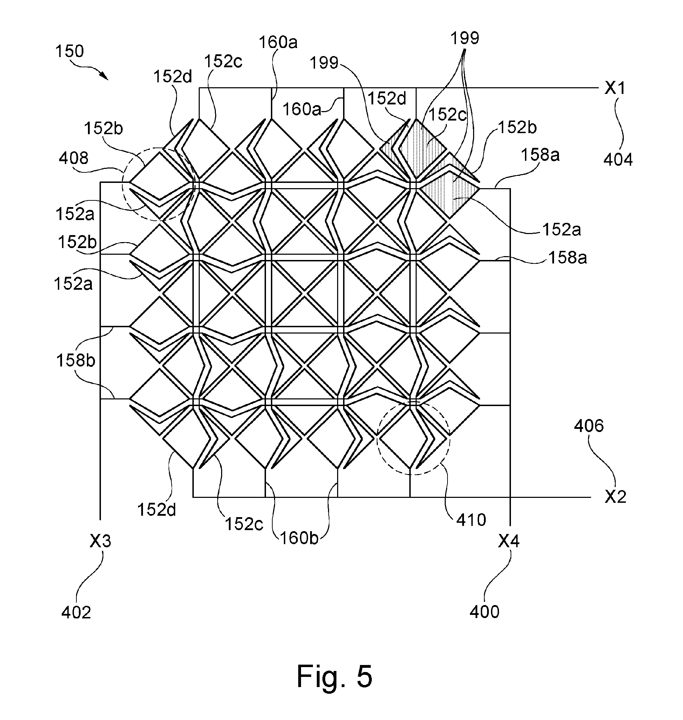

In an alternative embodiment (see for instance Fig. 5), the touch sensitive elements arranged in rows are grouped alternatingly into even row touch sensitive elements (for instance the second row, the fourth row, the sixth row, ...) and odd row touch sensitive elements (for instance the first row, the third row, the fifth row, ...), wherein the row readout interfaces of all even row touch sensitive elements are electrically connected to one another to form a single even row group readout interface and the row readout interfaces of all odd row touch sensitive elements are electrically connected to one another to form a single odd row group readout interface. Additionally or alternatively, the touch sensitive elements arranged in columns are grouped alternatingly into even column touch sensitive elements (for instance the second column, the fourth column, the sixth column, ...) and odd column touch sensitive elements (for instance the first column, the third column, the fifth column, ...), wherein the column readout interfaces of all even column touch sensitive elements are electrically connected to one another to form a single even column group readout interface, and the column readout interfaces of all odd column touch sensitive elements are electrically connected to one another to form a single odd column group readout interface. In an embodiment, all touch sensitive elements of a respective row are configured to have an electric property differing from the electric property of all remaining touch sensitive elements of the respective row in the absence of a user controlled actuator, and/or all touch sensitive elements of a respective column are configured to have an electric property differing from the electric property of all remaining touch sensitive elements of the respective column in the absence of a user controlled actuator. In such an embodiment, there are always two adjacent rows which belong together and there are always two adjacent columns which belong together. Two adjacent touch sensitive elements relating to two adjacent columns may be interleaved between one pair of touch sensitive elements of two adjacent rows and two touch sensitive elements assigned to a next pair of rows. In a similar way, two adjacent touch sensitive elements relating to two adjacent rows may be interleaved between one pair of touch sensitive elements of two adjacent columns and two touch sensitive elements assigned to a next pair of columns. In such an architecture, a first group of touch sensitive element rows has a common electrical connection and a remaining second group of touch sensitive element rows are connected to another common electrical connection. Thus, an alternating sequence of touch sensitive row elements assigned to one or the other electrical connection is formed. In a similar way, a first group of touch sensitive element columns has a common electrical connection and a remaining second group of touch sensitive element columns are connected to another common electrical connection. Thus, an alternating sequence of touch sensitive column elements assigned to one or the other electrical connection is formed. Altogether one detection signal (at an integrator node) needs to be measured for all touch sensitive elements in common, two electric row readout signals are to be applied subsequently for the two row groups, and two electric column readout signals are to be applied subsequently for the two column groups. When the electrical properties, for instance the capacitance values or the like, of the individual touch sensitive elements of a row differ, the change of the overall electrical detection signal will also change characteristically depending on onto which row the user has put her or his finger. Correspondingly, when the electrical properties, for instance the absolute capacitance values or the like, of the individual touch sensitive elements of a column differ, the change of the overall electrical detection signal will also change characteristically depending on onto which column the user has put her or his finger. Hence, there will be a double input or stimulus signal with regard to the rows and a double input or stimulus signal with regard to the columns. The evaluation of the detection signal measured (at the single integrator node) in response to the application of a stimulus to the even column group readout interface and earlier or later to the odd column group readout interface allows to unambiguously determine the touched column. In a similar way, the combination of the detection signals measured (at the single integrator node) in response to the application of a stimulus to the even row group readout interface and earlier or later to the odd row group readout interface may allow to determine the touched row on which the user has pressed with his or her finger. Thus, with a very small number of connection lines (five), the touch position may be determined.

In an embodiment, pairs of adjacent ones of the touch sensitive elements of two adjacent rows each have a triangular or quadrilateral shape pairwise constituting a diamond-shape with a first diagonal extending parallel to the rows and with a perpendicular second diagonal extending parallel to the columns. Pairs of adjacent ones of the touch sensitive elements of two adjacent columns may each have a triangular or quadrilateral shape pairwise constituting a diamond-shape with a first diagonal extending parallel to the rows and with a perpendicular second diagonal extending parallel to the columns. Each touch sensitive element of triangular or quadrilateral shape may be configured as two interdigitating, but spatially separated conductive structures such as interdigitating finger electrodes. For each pair, one of the quadrilaterally shaped electrode structures may have four angles below 180°, whereas the other one of the quadrilaterally shaped electrode structures may have one angle above 180°, thus together constituting a basically square shape with a diamond-like orientation. The relative area of the quadrilaterally shaped electrode structures of a pair may be different. If the entire corresponding diamond-like touch sensitive element is touched by a user, the absolute value of the change of the detection signal will change, but as a consequence of the different size of the two quadrilaterally shaped electrode structures it will change in a different quantity. The quantitative evaluation of the detection signals may therefore allow to unambiguously retrieve the row and column at which a user has touched the touch sensor.

It should further be said that it is also possible that one pair of touch sensitive elements of a pair (in two adjacent rows or in two adjacent columns) can be formed by two triangular electrode structures (each may have a 90° angle) which together form a diamond.

In an embodiment, the touch position data generator is configured for determining the touch row based on a weighted comparison of (particularly by calculating a ratio between) a readout detection signal detected upon applying the electric row readout signal to the even row group readout interface and a readout detection signal detected upon applying the electric row readout signal to the odd row group readout interface in response to the presence of a user controlled actuator and is configured for determining the touch column based on a weighted comparison of (particularly by calculating a ratio between) a readout detection signal detected upon applying the electric column readout signal to the even column group readout interface and a readout detection signal detected upon applying the electric column readout signal to the odd column group readout interface in response to the presence of a user controlled actuator. Such a signal comparison may involve the calculation of a ratio of the values of the two signals which can serve as an unambiguous fingerprint of a position on which the user has put a finger on a row and on a column.

In an embodiment, the touch sensor has a total number of touch sensitive element signal interfaces (i.e. interfaces for applying and detecting signals for determining a touch position) of five. One detection signal is detected for all touch sensitive elements, two row signals are applied subsequently as a corresponding stimulus and two column signals are applied subsequently as a corresponding stimulus. This allows for a particularly compact construction of the touch sensor.

In an embodiment of the smartcard, the touch position data generator forms part of the processor. Thus, the processing resource determining a touch position of the touch sensor may be the same processing resource which organizes the entire operation of the smartcard, i.e. controls the actual task or service provided by the smartcard. Thus, a single processing entity may be sufficient for the entire smartcard, including the touch sensor. This becomes possible in view of the very simple operation of the touch sensor and the very simple signal processing thereof.

In an embodiment, the processor is configured for unlocking the smartcard in response to receipt of touch position data meeting a predefined unlocking criterion. For example, a safety feature may be integrated in the smartcard preventing access of unauthorized persons to the smartcard. Therefore, only upon successful identification of a certain touch pattern, such as the entering of a correct pin number, may unlock the smartcard to enable the user to use the smartcard. In another embodiment, the unlocking procedure may power on the smartcard, i.e. start a power supply, which results in a low power consumption.

In an embodiment, the processor is configured for granting a user access to a service only in response to correctly input touch position data being indicative of a predefined service grant pin code. For instance, such a service may be a financial service which is only allowed when the user has successfully entered a correct pin code.

In an embodiment, the smartcard comprises a display (such as an LCD display) integrated in and/or on the carrier substrate and configured for displaying data provided by the processor and being derived from the touch position data. The display in combination with the touch sensor may thus form a user interface allowing for a bidirectional communication between the smartcard and the user. The smartcard may receive user commands via the touch sensor, whereas the display may display information or an invitation to perform a certain action to a user. For example, for a login procedure, the display may display the pin entered by the user.

In an embodiment, the smartcard is a contact smartcard which may have an electric contact area, for instance comprising several gold-plated contact pads. These pads provide electrical connectivity when inserted into a read and/or write device, which is used as a communications medium between the smartcard and a host (for instance a computer, a point of sale terminal) or a mobile telephone. Contact smartcards do not contain an internal energy supply device such as batteries, in contrast to this power may be supplied by the read and/or write device.

In an alternative embodiment, the smartcard is a contactless smartcard. In a contactless smartcard, the smartcard communicates with and is powered by the read and/or write device through radio frequency induction. These smartcards require only proximity to an antenna to communicate. Like smartcards with contacts, contactless smartcards do not have an internal power source. Instead, they use an inductor to capture some of the incident radio-frequency interrogation signal, rectify it, and use it to power the electronics of the smartcard.

A smartcard or chip card can be a tiny secure crypto processor embedded within a pocket-sized (for instance credit card-sized) card. A smartcard does usually not contain a battery, but power is supplied by a card reader/writer, that is to say by a read and/or write device for controlling the functionality of the smartcard by reading data from the smartcard or by writing data in the smartcard. A smartcard device may particularly be used in the areas of finance, security access and transportation. Such smartcards may contain high security processors that function as a security storage of data like card holder data (for instance name, account numbers, a number of collected loyalty points).

Exemplary fields of application of embodiments of the invention relate to eGovernment public services, for instance National ID, health cards, driving licenses, etc. Applications like digital signature, log on, secure transactions are further fields of application.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Fig. 1 illustrates a smartcard according to an exemplary embodiment of the invention.
Fig. 2 to Fig. 5 illustrate different touch sensors according to exemplary embodiments of the invention which may for instance be used for a smartcard.
Fig. 6 illustrates an exemplary implementation of diamond-shaped fringe capacitors of the embodiments of Fig. 1 to Fig. 5.

### DESCRIPTION OF EMBODIMENTS

The illustration in the drawing is schematical. In different drawings, similar or identical elements are provided with the same reference signs.

**Fig. 1** illustrates a smartcard 100 for cooperation with a read and/or write device (not shown in Fig. 1) according to an exemplary embodiment of the invention.

The smartcard 100 has the dimension of a credit card and comprises a carrier substrate 110 configured as a thin sheet of plastic material. A contact pad 120 comprising a plurality of individual electrically conductive contacts is provided on a surface of the carrier substrate 110 and is configured for communicating with the read and/or write device by a direct electric connection between the electrically conductive contacts of the contact pad 120 and counter contacts of the read and/or write device. In the shown embodiment, the smartcard 100 is a contact smartcard, so that the communication is performed via electrically conductive connections. In an alternative embodiment (not shown in the figures), the smartcard 100 can also be configured as a contactless smartcard so that the contact pad 120 is then to be replaced by a wireless communication unit having a transmission antenna.

A processor 140 organizes the entire operation of the smartcard 100, and may perform different kind of data processing. In terms of such a data processing, the processor 140 may also store data in a memory unit 180 which is also integrated in the smartcard 100. The processor 140 may also retrieve data from the memory 180.

The processor 140 also bidirectionally communicates with the communication unit 120 so as to control data transmitted from the smartcard 100 to a read and/or write device or to process data received via the communication unit 120 from the read and/or write device.

Furthermore, a display 130 such as a liquid crystal display is provided which is integrated on the smartcard 100 as well. The display 130 is also communicatively connected to the processor 140 so that the processor 140 may supply the display 130 with display data to be displayed on the display 130.

As can furthermore be taken from Fig. 1, a touch sensor 150 is embedded in the plastic carrier substrate 110 and is configured for being touched by a user. In response to such a touch, touch sensor 150 is configured for detecting and supplying touch position data to the processor 140 of the smartcard 100. The touch position data supplied from the touch sensor 150 to the processor 140 is indicative of the spatial part of the touch sensor 150 touched by the user. Particularly, the processor 140 sequentially or subsequently applies readout signals denoted as X1 to X8 to different rows 154 and columns 156 of touch sensitive elements 152 of the touch sensor 150, as will be explained below in more detail. Based on the evaluation of a single detection signal Y, determination of a position of the touch sensor 150 touched by a user to enter a certain operation command can be detected by the processor 140.

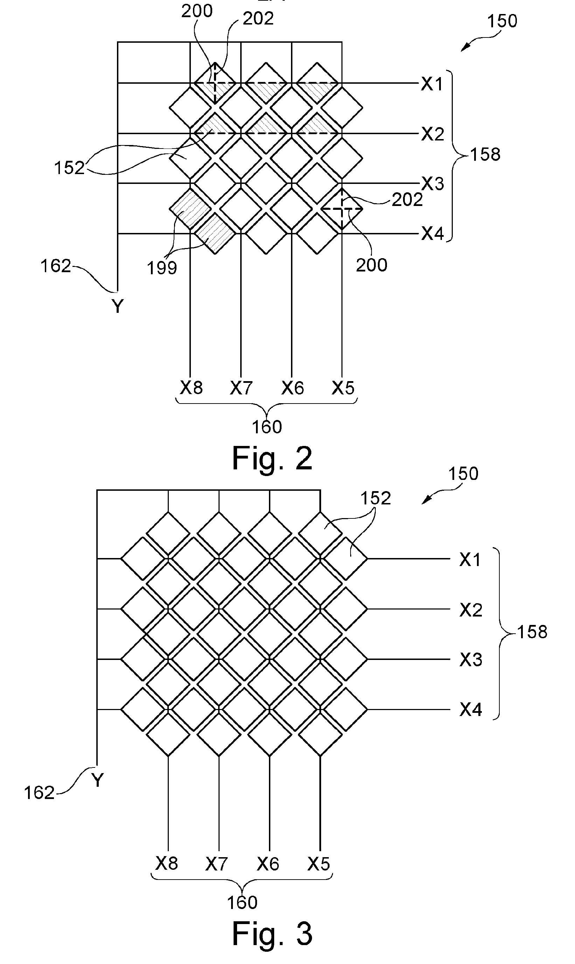

As can be taken from **Fig.** 2 which is an enlarged view of the touch sensor 150 shown in Fig. 1, the touch sensor 150 comprises a plurality of touch sensitive elements 152 arranged in a matrix-like pattern in rows 154 and in columns 156. In the present example, each row 154 is constituted by three horizontally aligned and ohmically connected touch sensitive elements 152, and each column 156 is constituted of three vertically aligned and ohmically connected touch sensitive elements 152. Each of the touch sensitive elements 152 is configured as a capacitive touch sensitive element 152 of two interdigitated finger electrodes with a diamond-shaped envelope and being located in a plane (see Fig. 6 for an exemplary construction of each capacitive touch sensitive element 152) which changes its capacitance value as an example for an electric property in the presence of a user controlled actuator, i.e. a body part such as a finger of the user or an actuator stick held and guided by the user's hand. This change of the capacitance value occurs according to the principle of fringe capacitors: When a user touches one or more capacitive touch sensitive elements 152, the presence of the finger will locally change the dielectric constant which will characteristically influence the stray field between the two neighboured and interdigitating electrodes of the capacitive touch sensitive element(s) 152. Correspondingly, a changed capacitance value and therefore electrical signal can be detected in response to a touch event. A temporary change of the capacitance value is therefore an indication to a touch event at a specific touch sensitive element 152. When a certain input current or voltage is applied to one of the electrically conductive structures of the capacitive touch sensitive element 152 (see reference numeral Xn in Fig. 6), a current or voltage change may occur between the electrically conductive structures of the capacitive touch sensitive element 152 in response to the user actuation of a certain area of the touch sensor 150 which will change an electric signal at the other one of the electrically conductive structures of the capacitive touch sensitive element 152 (see reference numeral Y in Fig. 6).

A plurality of row readout interfaces 158 is provided. An electric row readout signal is applied, as a detection stimulus, sequentially at each of the row readout interfaces 158, one after the other and always only one at a time. For each row, one finger electrode of all touch sensitive elements 152 of the respective row are ohmically connected to one another and with an assigned one of the row readout interfaces 158. An electric column readout signal is applied, as a detection stimulus, sequentially at each of the row readout interfaces 160, one after the other and always only one at a time. Moreover an electric readout signal is applied, at each point of time, always only to one row or to one column, while all remaining rows and columns are free of such a readout signal at this point of time. The respectively "active" (or "read out") row or column, to which an electric readout signal is applied at a certain point of time, may be sequentially changed to thereby sample the rows and columns sequentially and one after the other to detect a touch event at the touch sensitive elements 152 of the respective row or column. For each column, one finger electrode of all touch sensitive elements 152 of the respective column are ohmically connected to one another and with an assigned one of the column readout interfaces 160.

A single readout detection interface 162 is electrically coupled to each of the other finger electrodes of all touch sensitive elements 152 of all rows and columns which other finger electrodes are not ohmically connected to the row readout interfaces 158 or the column readout interfaces 160. The single readout detection interface 162 therefore detects an electric readout detection signal with contributions from the touch sensitive elements 152 of each row and each column and therefore acts as an integrator node. A characteristic change of the readout detection signal occurs only when a user touches a touch sensitive element 152 to which presently the readout signal is applied.

For instance, an electric row readout signal X1 is applied to the row readout interface 158 of the first row (while all other row readout interfaces 158 and column readout interfaces 160 are inactive or idle) and an electric readout detection signal Y is detected at the readout detection interface 162. Then, an electric row readout signal X2 is applied to the row readout interface 158 of the second row (while all other row readout interfaces 158 and column readout interfaces 160 are inactive or idle) and an electric readout detection signal Y is detected at the readout detection interface 162. Then, an electric row readout signal X3 is applied to the row readout interface 158 of the third row (while all other row readout interfaces 158 and column readout interfaces 160 are inactive or idle) and an electric readout detection signal Y is detected at the readout detection interface 162. Then, an electric row readout signal X4 is applied to the row readout interface 158 of the third row (while all other row readout interfaces 158 and column readout interfaces 160 are inactive or idle) and an electric readout detection signal Y is detected at the readout detection interface 162. Then, an electric column readout signal X5 is applied to the column readout interface 160 of the fourth column (while all other row readout interfaces 158 and column readout interfaces 160 are inactive or idle) and an electric readout detection signal Y is detected at the readout detection interface 162. Then, an electric column readout signal X6 is applied to the column readout interface 160 of the third row (while all other row readout interfaces 158 and column readout interfaces 160 are inactive or idle) and an electric readout detection signal Y is detected at the readout detection interface 162. Then, an electric column readout signal X7 is applied to the column readout interface 160 of the second row (while all other row readout interfaces 158 and column readout interfaces 160 are inactive or idle) and an electric readout detection signal Y is detected at the readout detection interface 162. Finally, an electric column readout signal X5 is applied to the column readout interface 160 of the fourth row (while all other row readout interfaces 158 and column readout interfaces 160 are inactive or idle) and an electric readout detection signal Y is detected at the readout detection interface 162.

A touch position data generator (such as processor 140) is configured for generating the touch position data including an indication of a touch row at which the user has touched a touch sensitive element and including an indication of a touch column at which the user has touched the touch sensitive element 152. The touch position data generator, which forms part of the processor 140 of Fig. 1 and is not shown in Fig. 2, is connected to each of the row readout interfaces 158 and each of the column readout interfaces 160 as well as to the readout detection interface 162.

More precisely, the touch position data generator is configured for determining the touch row based on the electric readout detection signals Y detected upon applying row readout signals X1 to X4 subsequently to the individual row readout interfaces 158.

Furthermore, the touch position data generator is configured for determining the touch column based on the electric readout detection signals Y detected upon applying row readout signals X5 to X8 subsequently to the individual column readout interfaces 160.

If a user touches one of the touch sensitive elements 152 of a column 156 and changes the assigned capacitance value, the electric readout detection signal Y changes in response to the application of the corresponding one of signals X5 to X8 to which the touched touch sensitive element 152 belongs, whereas all remaining ones of signals X5 to X8 stay the same. Correspondingly, if a user touches one of the touch sensitive elements 152 of a row 154 and changes the assigned capacitance value, the electric readout detection signal Y changes in response to the application of one of signals X1 to X4 to which the touched touch sensitive element 152 belongs, whereas all remaining ones of signals X1 to X4 stay the same. The combination of the detected selected row 154 and the detected selected column 156 then results in the determination of the touch position.

For example, the user touches the lowermost left-hand corner of the touch sensitive elements 152 of the touch sensor 150 in Fig. 2. This results in a characteristic change of the dielectric constant (being close to that of water for a finger of a user) at a selected touch sensitive element 199. The change of the dielectric characteristic has an influence on the electric field (particularly at the electric stray field) at the selected touch sensitive elements 199 and changes the capacitance values of these two selected touch sensitive elements 199. Therefore, the detection signal Y will be characteristically changed when applying stimulus signals X4 and X8, whereas the detection signal Y remains the same when applying stimulus signals X1 to X3, X5 to X7. Thus, the information that the signals on lines X8 and X4 have changed, allows the processor 140 to conclude that the user has selected the area of the touch sensor 150 relating to the selected touch sensitive elements 199.

Although many different configurations of the touch sensitive elements 152 are possible, each of the touch sensitive elements 152 may consist of a fringe capacitor formed by two interdigitate finger electrodes, for instance having an envelope shape of a diamond. The electric readout detection signal Y may be detected at one of these electrodes of all touch sensitive elements 152. The corresponding electric readout output signal X1 to X8 may be applied at the other one of these electrodes of all touch sensitive elements 152 of a special row 154 or of a special column 156.

According to Fig. 2, all first electrodes of all diamond shaped capacitors are connected to the readout interface at which readout signal Y is detectable, whereas all second electrodes of a respective row 154 are connected with the corresponding drive signal (i.e. second electrodes of first row 154 are connected to readout output signal or drive signal X1, second electrodes of second row 154 are connected to drive signal X2, second electrodes of third row 154 are connected to drive signal X3, second electrodes of fourth row 154 are connected to drive signal X4. Correspondingly, all second electrodes of a respective column 156 are connected with the corresponding drive signal (i.e. second electrodes of first column 156 are connected to drive signal X8, second electrodes of second column 156 are connected to drive signal X7, second electrodes of third column 156 are connected to drive signal X6, second electrodes of fourth column 156 are connected to drive signal X5. Each row 154 and each column 156 has four diamond shaped capacitors.

Fig. 1 and Fig. 2 furthermore show that touch sensitive elements 152 of adjacent rows 154 are arranged to partially overlap with interposed touch sensitive elements 152 of the columns 156 in a vertical direction. For the example of the two uppermost rows of touch sensitive elements 152 in Fig. 2, their vertically overlapping portions are illustrated as hatched areas. In a similar way, touch sensitive elements 152 of adjacent columns 156 are arranged to partially overlap with interposed touch sensitive elements 152 of the rows 154 in a horizontal direction. Therefore, a basically gap-free structure of capacitive touch sensitive elements 152 is obtained both rendering the touch sensor 150 compact and the detection of the user selection reliable and precise.

All touch sensitive elements 152 are diamond-shaped with a first diagonal 200 extending parallel to the rows 154 and with a perpendicular second diagonal 202 extending parallel to the columns 156. Also this contributes to the compact architecture of the touch sensor 150.

All touch sensitive elements 152 have, in a touch-free state, the same capacitance value in view of their identical electrode form and dimension. Therefore, the touch sensor 150 is easy in manufacture since all touch sensitive elements 152 have the same design.

As can furthermore be taken from Fig. 2, only nine connection lines 158, 160, 162 are necessary, i.e. corresponding to the four row readout interfaces 158, the four column readout interfaces 160 and the single readout detection interface 162. Thus, also the electrical control of the touch sensor 150 is very simple as well as the signal processing for the determination of the touch position.

A two-dimensional position sensor according to an embodiment of the invention may therefore be implemented as indicated by Fig. 2. In total, 24 diamond-shaped capacitors as touch sensitive elements 152 are configured to implement a row 154 and column 156 position detector. The Y-electrodes of all 24 touch sensitive elements 152 are connected to the common Y-line or readout detection interface 162. The Xn-electrodes of the touch sensitive elements 152 are connected to the respective X-line, i.e. row readout interface 158 or column readout interface 160. In order to identify the vertical touch position consecutive capacitance measurements between X1 and Y, X2 and Y, X3 and Y and X4 and Y are performed while lines X5 to X8 are kept at a neutral state. A finger touch between X1-connected touch sensitive elements 152 and X2-connected touch sensitive elements 152 will cause a change in capacitance readout. From the four capacitance measurements X1 to X4, the vertical touch position may be calculated using weighted summing functions. The procedure is repeated for the capacitance measurements between X5 and Y, X6 and Y, X7 and Y and X8 and Y. The last measurements yield the horizontal touch position. Hence, the position of a touch point may be determined by its horizontal and vertical coordinate in a Cartesian coordinate system.

**Fig. 3** shows an embodiment which equals to the embodiment of Fig. 2 but uses five touch sensitive elements 152 per row 154 and five touch sensitive elements 152 per column 156. The number of signals to be applied remains the same, i.e. eight, and the number of signals to be evaluated remains the same. i.e. eight times one. The number of connection lines also remains the same, i.e. nine.

The configuration indicated by Fig. 3 represents an alternative embodiment of the configuration indicated by Fig. 2. In contrast to Fig. 2, additional corner capacitors are added. As a benefit, the spatial resolution is improved without a penalty in the amount of required signal lines. The position determination utilizes the same procedure as described for Fig. 2.

Referring again to Fig. 2 and Fig. 3, one gist of these embodiments is to create a mesh of capacitors some of which are connected in parallel. The vertical coordinate of a touch point corresponding to a user selection is determined by reading the capacitance values of the capacitors by detecting signals Y in response to the application of stimuli X1 to X4, respectively. The horizontal coordinate of a touch point corresponding to a user selection is determined by reading the capacitance values of the capacitors by detecting signals Y in response to the application of stimuli X5 to X8, respectively. The readout detection interface 162 at which detection signal Y is detectable is connected to all capacitors. Each diamond shape may represent a fringe capacitance (the structure of the fringes is not shown in Fig. 2 and Fig. 3).

According to Fig. 3, all first electrodes of all diamond shaped capacitors are connected to the readout interface at which readout signal Y is detectable, whereas all second electrodes of a respective row 154 are connected with the corresponding drive signal (i.e. second electrodes of first row 154 are connected to readout output signal or drive signal X1, second electrodes of second row 154 are connected to drive signal X2, second electrodes of third row 154 are connected to drive signal X3, second electrodes of fourth row 154 are connected to drive signal X4. Correspondingly, all second electrodes of a respective column 156 are connected with the corresponding drive signal (i.e. second electrodes of first column 156 are connected to drive signal X8, second electrodes of second column 156 are connected to drive signal X7, second electrodes of third column 156 are connected to drive signal X6, second electrodes of fourth column 156 are connected to drive signal X5. Each row 154 and each column 156 has five diamond shaped capacitors, which results in a further increased resolution as compared to Fig. 2.

**Fig. 4** shows an embodiment which equals to the embodiment of Fig. 3 but uses additional touch sensitive elements 450, 452.

The configuration indicated by Fig. 4 represents an alternative embodiment of the configuration indicated by Fig. 3. In contrast to Fig. 3, Fig. 4 adds additional triangular corner devices as touch sensitive elements 450, 452 in order to improve the available sensor area. The sensor area is improved without a penalty in the amount of required signal lines. The position determination utilizes a similar procedure as described for Fig.3.

More precisely, all touch sensitive elements 450, 452 located along a circumferential edge of the shown square array of touch sensitive elements 152, 450, 452 are configured to have a first capacitance value in the absence of a body part of a user. All touch sensitive elements 152 located within the circumferential edge are configured to have a second capacitance value, which differs from the first capacitance value. Thus, an array of mutually overlapping diamond-shaped touch sensitive elements 152 constitute the central touch sensitive elements surrounded by the triangular circumferentially arranged touch sensitive elements 450, 452 which form edges of the square touch sensitive area. Circumferential touch sensitive elements 452 of a row are connected to the row readout interface 158 (see X1/X4) of the directly adjacent row of central touch sensitive elements 152. Circumferential touch sensitive elements 450 of a column are connected to the column readout interface 160 (see X5/X8) of the directly adjacent column of central touch sensitive elements 152. Detection signals Y from the circumferential touch sensitive elements 450, 452 on the one hand and from the electrically connected central row touch sensitive elements 152 on the other hand can be distinguished, in a weighted signal evaluation, by the different values of the detection signal Y resulting from the different values of their capacitance.

**Fig. 5** shows a touch sensor 150 having another architecture than Fig. 2 to Fig. 4.

In the embodiment of Fig. 5, the touch sensitive elements 152 arranged in rows are grouped alternatingly into even row touch sensitive elements 152a (second row, fourth row, ..) and odd row touch sensitive elements 152b (first row, third row, ...). The row readout interfaces 158a of all even row touch sensitive elements 152 are electrically connected to one another to form a single even row group readout interface 400 to which a single readout signal X4 can be applied. The row readout interfaces 158b of all odd row touch sensitive elements 152b are electrically connected to one another to form a single odd row group readout interface 402 to which another single readout signal X3 can be applied.

In a corresponding way, the touch sensitive elements 152 arranged in columns 156 are grouped alternatingly into even column touch sensitive elements 152c (second column, fourth column, ...) and odd column touch sensitive elements 152d (first column, third column, ...). The column readout interfaces 160a of all even column touch sensitive elements 152c are electrically connected to one another to form a single even column group readout interface 404 to which a readout signal X1 can be applied. Correspondingly, the column readout interfaces 160b of all odd column touch sensitive elements 152d are electrically connected to one another to form a single odd column group readout interface 406 to which a single readout signal X2 can be applied.

Although not shown in Fig. 5, all touch sensitive elements 152a to 152d are electrically coupled to one another so that an electric readout detection signal can be detected at a readout detection interface (see reference numeral 162 in Fig. 1 to Fig. 4, not shown in Fig. 5) which includes contributions of all touch sensitive elements 152a to 152d.

Each touch sensitive element 152a or 152b of a respective row 154 is configured to have a capacitance behaviour which differs from the capacitance behaviour of all remaining touch sensitive elements 152a or 152b of the respective row 154 when no touch operation is performed by the user to the respective touch sensitive element 152a or 152b. For odd rows, the dimension of the touch sensitive elements 152b is continuously reduced from the left hand side to the right hand side of Fig. 4. For even rows, the dimension of the touch sensitive elements 152a is continuously increased from the left hand side to the right hand side of Fig. 5.

The same holds for the columns 156. Each touch sensitive element 152c or 152d of a respective column 156 is configured to have a capacitance behaviour which differs from the capacitance behaviour of all remaining touch sensitive elements 152c or 152d of the respective column 156 when no touch operation is performed by the user to the respective touch sensitive element 152c or 152d. For odd columns, the dimension of the touch sensitive elements 152d is continuously increased from the upper end to the lower end of Fig. 5. For even columns, the dimension of the touch sensitive elements 152c is continuously reduced from the upper end to the lower end of Fig. 5.

As an example, the uppermost row 154 of touch sensitive elements 152b in Fig. 5 is explained in more detail. It consists of five serially connected touch sensitive elements 152b which have a quadrilateral shape (only the central or third one of the touch sensitive elements 152b has a triangular shape). However, the area of the respective quadrilateral (or triangular) shape of the touch sensitive elements 152b is reduced continuously from the left-hand side of Fig. 5 to the right-hand side of Fig. 5.

In a corresponding way, the five touch sensitive elements 152a of the second row 154 in Fig. 5 which are grouped with the touch sensitive elements 152b of the first row 154 have a quadrilateral (or triangular) shape which combines with the quadrilateral (or triangular) shape of the corresponding touch sensitive elements 152b to form a diamond-like structure, see reference numeral 408. Hence, since the area of the quadrilaterally (or triangularly) shaped touch sensitive elements 152b of the first row of Fig. 5 continuously shrinks from the left-hand side to the right-hand side, the corresponding quadrilaterally (or triangularly) shaped touch sensitive elements 152a have an increasing size from the left-hand side towards the right-hand side of Fig. 5. The same holds for the arrangement of the touch sensitive elements 152d and 152c along the columns 156 of Fig. 5.

Since the absolute capacitance behaviour of the individual touch sensitive elements 152a to 152d differs since their relative area values differ, touching the respective touch sensitive elements 152a to 152d has a different impact on the detection signal Y upon applying a stimulus X1 to X4. When a user touches onto dedicated ones of the touch sensitive elements 152a to 152d, the selected touch column 156 can be detected based on a comparison of readout signal Y detected after applying a stimulus signal X4 at the even row group readout interface 400 and readout signal Y detected after applying a stimulus signal X3 at the odd row group readout interface 402 in response to the presence of a finger of the user. Furthermore, a selected touch row 154 can be determined based on a comparison of a readout signal Y detected after applying a stimulus signal X1 at the even column group readout interface 404 and the readout signal Y detected after applying a stimulus signal X2 at the odd column group readout interface 406 in response to a touch operation of the user.

This will be explained based on the example that the selected region of the touch sensor 150 of Fig. 5 is defined by the selected touch sensitive elements 199. All four signals Y detected after applying stimulus signals X1 to X4 are influenced by this selection. First referring to the row detection, the relatively large area of the selected touch sensitive element 152a will result in a relatively large change of the value of Y detected after applying stimulus signal X4. In contrast to this, the relatively small area of touch sensitive element 152b of the selected area will result in a relatively small change of signal Y detected after applying stimulus signal X3. A combined evaluation of the signals Y detected after applying stimulus signals X3 and X4 will therefore result in the fact that the selection has been made by the user on the very right-hand side of Fig. 5. In a similar way, the signal Y detected after applying stimulus signal X1 will be more strongly impacted by the selection referring to reference numeral 199 as compared to the signal Y detected after applying stimulus signal X2, since selected touch sensitive element 152c has a larger area than selected touch sensitive element 152d. Therefore, a weighted combination of the evaluated signals Y detected after applying stimulus signals X1 and X2 will result to the fact that the selection 199 has been made on the upper end of Fig. 5.

The configuration of Fig. 5 is characterized by a very small number of connection lines, i.e. five, and a very small number of detection signals to be processed, i.e. four.

A gist of this embodiment is that the vertical coordinate of a user-selected touch point is obtained from the ratio of the detection signals Y detected after applying stimulus signals X1 and X2. The horizontal coordinate is obtained from the ratio of the detection signals Y detected after applying stimulus signals X3 and X4. Each quadrilateral shape may represent a fringe capacitor (the structure of the fringes is not shown in Fig. 5).

The embodiment of a two-dimensional position sensor indicated by Fig. 5 utilizes a different principle compared to the embodiments presented before. This embodiment represents a four-capacitor group configuration.

A gist of this embodiment is to implement a weighted summing function by hardware implemented weighting.

Each of the diamond shaped capacitive sensor structures 408 (152a+152b or 152c+152d) comprises in fact two capacitors. The weight assigned two each of these two capacitors changes linear from left to right in case of X3 and X4, or from top to bottom in case of X1 and X2. For every capacitor the sum of the two capacitors forming one diamond-shaped capacitor structure is constant for all capacitors. This means that if one of the two capacitors increased linear the other decreases linear. All Y-nodes of all capacitors or touch sensitive elements 152a, 152b, 152c, 152d are connected to a common Y-line. When e.g. the capacitance between X1 and Y and the capacitance between X2 and Y are measured the ratio of the two capacitances is a measure for the vertical or Y-position. The detailed calculations involve basic mathematics and are not further detailed here. The horizontal or X-position is obtained accordingly by evaluating the capacitances between X3 and Y as well as between X4 and Y. Thus, five signal lines 400, 402, 404, 406, 162 and corresponding signals Y, X1, X2, X3 and X4 are required to determine the position of a touch in a two-dimensional plane.

While in the configuration indicated by Fig. 5 the assigned weights are 1/6, 2/6, 3/6, 4/6 and 5/6, a better position accuracy may be obtained in another embodiment by assigning the weights 0, 0.25, 0.5, 0.75 and 1. These weights may easily be generated from unit capacitors.

In one embodiment the position will be calculated by the ratio of the larger capacitance to the smaller capacitance obtained from the capacitance measurements in one dimension. The ambiguity whether the result is in the left or the right plane is removed by identifying which of the two capacitances is the larger one.

A general rule for configurations with more or less capacitors is not further detailed but may be easily determined by those of skilled art since it requires only simple mathematics. In case of the last example the weight factors are (x-1)/(n-1) with x being the index in one direction of one dimension and n being the amount of capacitor structures in one dimension.

In an embodiment of the invention a switched capacitor integrator with the fly cap being the capacitor under test is used to measure the capacitances of the disclosed structures. This switched capacitor may be implemented by hardware or software configuring a microcontroller unit to act as a switched capacitor integrator.

In each of the previously described embodiments of the invention, each diamond shape represents a fringe capacitor. An exemplary embodiment of a fringe capacitor is given by **Fig. 6****.** In the above description, the fringe capacitors forming the touch sensitive elements 152 are indicated by their simplified solid view indicated on the left side of Fig. 6.

The fringe capacitor forming the touch sensitive element 152 is constructed from a pair of interdigitated finger electrodes 600, 602 having electric interfaces named Y and Xn (n=1,2,...). Since the electrodes 600, 602 are very thin (for instance between 18 µm and 35µm) their sidewall capacitance is relatively small. In contrast to this, the fringe field capacitance (outside of the constant electrical field section) is for instance up to four times larger than the sidewall capacitance. The absolute capacitances of these fringe field capacitors may be in the order of 1 pF to 15 pF, depending of geometry and εᵣ of the encapsulating material. A finger of a user approaching the capacitors causes a distortion of the capacitors fringe field resulting in a capacitance change. This capacitance change can be measured and used as an indicator for a touch activity level. Not only the diamond-shaped touch sensitive elements 152, but also the triangular touch sensitive elements 450, 452 as well as the triangular/quadrilateral touch sensitive elements 152a, 152b, 152c, 152d can be constructed similar to the image of Fig. 6 as two interdigitating finger electrodes.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A touch sensor (150) for providing touch position data in response to a user operation, the touch position data being indicative of a position of the touch sensor (150) touched by the user, the touch sensor (150) comprising:
a plurality of diamond-shaped touch sensitive elements (152) arranged in rows (154) and columns (156) and each being configured for changing an electric property in the presence of a user controlled actuator;
a plurality of row readout interfaces (158) at each of which an electric row readout signal is to be applied, wherein, for each row (154), all touch sensitive elements (152) of the respective row (154) are electrically connected to one another and are electrically coupled with an assigned one of the row readout interfaces (158);
a plurality of column readout interfaces (160) at each of which an electric column readout signal is to be applied, wherein, for each column (156), all touch sensitive elements (152) of the respective column (156) are electrically connected to one another and are electrically coupled with an assigned one of the column readout interfaces (160);
a readout detection interface (162) electrically coupled to each of the touch sensitive elements (152) for detecting an electric readout detection signal from the touch sensitive elements (152) of each row (154) and each column (156);
a touch position data generator (140) configured for generating the touch position data including an indication of a touch row (154) at which the user has touched a touch sensitive element (152) and including an indication of a touch column (156) at which the user has touched the touch sensitive element (152), wherein the touch position data generator (140) is configured for determining the touch row (154) based on the electric readout detection signal detected upon applying row readout signals subsequently to the individual row readout interfaces (158) and for determining the touch column (156) based on the electric readout detection signal detected upon applying column readout signals subsequently to the individual column readout interfaces (160).

2. The touch sensor (150) according to claim 1, wherein the touch sensitive elements (152) are capacitive touch sensitive elements (152) comprising two separated electrically conductive structures, particularly being interdigitating conductive structures, more particularly being interdigitating finger electrodes, arranged for changing its capacitance value in the presence of a user controlled actuator, wherein one of the two separated electrically conductive structures of each of the touch sensitive elements (152) are coupled to one another and to the readout detection interface (162), and wherein the other one of the two separated electrically conductive structures of each of the touch sensitive elements (152) are coupled to the respectively assigned column readout interface (160) or row readout interface (158).

3. The touch sensor (150) according to claim 1, wherein touch sensitive elements (152) of adjacent rows (154) are arranged to partially overlap with interposed touch sensitive elements (152) of the columns (156) and/or touch sensitive elements (152) of adjacent columns (156) are arranged to partially overlap with interposed touch sensitive elements (152) of the rows (154).

4. The touch sensor (150) according to claim 1, wherein the diamond-shaped touch sensitive elements (152) are diamond-shaped with a first diagonal (200) extending parallel to the rows (154) and with a perpendicular second diagonal (202) extending parallel to the columns (156).

5. The touch sensor (150) according to claim 1, wherein the touch position data generator (140) is configured for determining the touch row (154) by correlating a change of the detected electric readout detection signal in response to the presence of a user controlled actuator at a row assigned to a row readout interface (158) to which the row readout signal is presently applied when the change occurs and is configured for determining the touch column (156) by correlating a change of the detected electric readout detection signal in response to the presence of a user controlled actuator at a column assigned to a column readout interface (160) to which the column readout signal is presently applied when the change occurs.

6. The touch sensor (150) according to claim 1, wherein all touch sensitive elements (152) are configured to have the same electric property, particularly the same capacitance value, in the absence of a user controlled actuator.

7. The touch sensor (150) according to claim 1, wherein all touch sensitive elements (300, 302) located along a circumferential edge of a rectangular, particularly a quadratic, array of touch sensitive elements (152) are configured to have a first electric property, particularly a first capacitance value, in the absence of a user controlled actuator, and wherein all touch sensitive elements (152) located within the circumferential edge are configured to have a second electric property, particularly a second capacitance value, which differs from the first electric property.

8. The touch sensor (150) according to claim 1, having a total number of touch sensitive element signal interfaces (158, 160, 162) which equals to a number of the rows (154) plus a number of the columns (156) plus one.

9. The touch sensor (150) according to claim 1,
wherein the touch sensitive elements (152) arranged in rows (154) are grouped alternatingly into even row touch sensitive elements (152a) and odd row touch sensitive elements (152b), wherein the row readout interfaces (158a) of all even row touch sensitive elements (152a) are electrically connected to one another to form a single even row group readout interface (400) and the row readout interfaces (158b) of all odd row touch sensitive elements (152b) are electrically connected to one another to form a single odd row group readout interface (402); and/or
wherein the touch sensitive elements (152) arranged in columns (156) are grouped alternatingly into even column touch sensitive elements (152c) and odd column touch sensitive elements (152d), wherein the column readout interfaces (160a) of all even column touch sensitive elements (152c) are electrically connected to one another to form a single even column group readout interface (404) and the column readout interfaces (160b) of all odd column touch sensitive elements (152d) are electrically connected to one another to form a single odd column group readout interface (406).

10. The touch sensor (150) according to claim 9, wherein each of the touch sensitive elements (152a, 152b) of a respective row (154) is configured to have an electric property differing from the electric property of all remaining touch sensitive elements (152a, 152b) of the respective row (154) in the absence of a user controlled actuator, and/or wherein each of the touch sensitive elements (152c, 152d) of a respective column (156) is configured to have an electric property differing from the electric property of all remaining touch sensitive elements (152c, 152d) of the respective column (156) in the absence of a user controlled actuator.

11. The touch sensor (150) according to claim 9, wherein pairs (408) of adjacent ones of the touch sensitive elements (152a, 152b) of two adjacent rows (154) each have a triangular or quadrilateral shape pairwise constituting basically a diamond-shape with a first diagonal (200) extending parallel to the rows (154) and with a perpendicular second diagonal (202) extending parallel to the columns (156), and/or wherein pairs (410) of adjacent ones of the touch sensitive elements (152c, 152d) of two adjacent columns (156) each have a triangular or quadrilateral shape pairwise constituting basically a diamond-shape with a first diagonal (200) extending parallel to the rows (154) and with a perpendicular second diagonal (202) extending parallel to the columns (156).

12. The touch sensor (150) according to claim 9, wherein the touch position data generator (140) is configured for determining the touch row (154) based on a weighted comparison of, particularly by calculating a ratio between, a readout detection signal detected upon applying the electric row readout signal to the even row group readout interface (400) and a readout detection signal detected upon applying the electric row readout signal to the odd row group readout interface (402) in response to the presence of a user controlled actuator and is configured for determining the touch column (156) based on a weighted comparison of, particularly by calculating a ratio between, a readout detection signal detected upon applying the electric column readout signal to the even column group readout interface (404) and a readout detection signal detected upon applying the electric column readout signal to the odd column group readout interface (406) in response to the presence of a user controlled actuator.

13. The touch sensor (150) according to claim 9, having a total number of touch sensitive element signal interfaces (400, 402, 404, 406) of five.

14. A method of determining a user input by a touch sensor (150) for providing touch position data in response to a user operation, the touch position data being indicative of a position of the touch sensor (150) touched by the user, wherein the touch sensor (150) comprises a plurality of diamond-shaped touch sensitive elements (152) arranged in rows (154) and columns (156) and each being configured for changing an electric property in the presence of a user controlled actuator, the method comprising:
subsequently applying an electric row readout signal to each of a plurality of row readout interfaces (158), wherein, for each row (154), all touch sensitive elements (152) of the respective row (154) are electrically connected to one another and are electrically coupled with an assigned one of the row readout interfaces (158);
subsequently applying an electric column readout signal to each of a plurality of column readout interfaces (160), wherein, for each column (156), all touch sensitive elements (152) of the respective column (156) are electrically connected to one another and are electrically coupled with an assigned one of the column readout interfaces (160);
detecting, for each individual application of the electric row readout signal and for each individual application of the electric column readout signal, an electric readout detection signal at a readout detection interface (162) electrically coupled to each of the touch sensitive elements (152) of each row (154) and each column (156);
generating the touch position data including an indication of a touch row (154) at which the user has touched a touch sensitive element (152) and including an indication of a touch column (156) at which the user has touched the touch sensitive element (152) by
determining the touch row (154) based on the electric readout detection signal detected upon applying row readout signals subsequently to the individual row readout interfaces (158); and
determining the touch column (156) based on the electric readout detection signal detected upon applying column readout signals subsequently to the individual column readout interfaces (160).

15. A smartcard (100) for cooperation with a read and/or write device, the smartcard (100) comprising:
a carrier substrate (110);
a communication unit (120) integrated in and/or on the carrier substrate (110) and configured for communicating with the read and/or write device;
a touch sensor (150) configured according to claim 1, integrated in and/or on the carrier substrate (110) and configured for providing touch position data to a processor (140) in response to a user operation, the touch position data being indicative of a position of the touch sensor (150) touched by the user;
the processor (140) integrated in and/or on the carrier substrate (110) and configured for processing the touch position data and for data communication with the read and/or write device via the communication unit (120).
